# EUROPEAN PATENT APPLICATION

(11) **EP 1 720 348 A2**
(43) Date of publication of application: **08.11.2006**
(21) Application number: 06009149.3
(22) Date of filing: 03.05.2006
(51) Int. Cl.: H04N 5/76

(54) **Mobile terminal with personal video recorder**

(30) Priority: 04.05.2005 KR 20050037501
(71) Applicant: LG Electronics Inc., Yongdungpo-Gu Seoul 150-010 (KR)
(72) Inventor: Lee, Sung Ho, Bucheon-si Gyeonggi-do (KR)
(74) Representative: Katérle, Axel

(57) **Abstract**

A method for controlling recording at a mobile terminal includes receiving a video signal having stream data, determining signal quality of the stream data, and obtaining loss information associated with a lost portion of the stream data responsive to the signal quality. In addition, a mobile terminal includes a receiver for receiving a video signal having stream data. The controller may be configured to determine signal quality of the stream data and obtain loss information associated with a lost portion of the stream data responsive to the signal quality. Alternatively, the mobile terminal includes a controller configured to obtain previously stored loss information, such that the loss information is associated with a lost portion of stream data of a video signal, and a receiver for receiving lost stream data corresponding to the loss information from a video data server responsive to an information request.

## Description

This application claims the benefit of the Korean Patent Application No. 10-2005-0037501, filed on May 4, 2005, which is hereby incorporated by reference as if fully set forth herein.

### BACKGROUND OF THE INVENTION

### Field of the Invention

The present invention relates to a mobile terminal having a video recorder, and more particularly to the recovery of missing video data previously unavailable for recording due to an adverse reception environment, or other reception or recording problem.

### Discussion of the Related Art

Mobile communication technologies have developed to the extent that mobile terminals now have access to real time video-on-demand (VOD) and other video broadcast services. Conventional mobile terminals utilizing VOD services, for example, are susceptible to signal affecting conditions in the reception environment within which the mobile terminal is located. Loss of the video signal is possible whenever the mobile terminal enters such a compromised reception environment. Recovery of such missing video data at the mobile terminal is useful, especially for terminals which record video for later use.

### SUMMARY OF THE INVENTION

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

In accordance with an embodiment, a method for controlling recording at a mobile terminal includes receiving a video signal comprising stream data, determining signal quality of the stream data, and obtaining loss information associated with a lost portion of the stream data responsive to the signal quality.

In one feature, the determining of the signal quality includes comparing field strength of the stream data with a first reference level, such that if the field strength is lower than the first reference level, then the method further includes storing the loss information in memory. Alternatively or additionally, the determining of the signal quality may include comparing synchronization of the stream data with a first reference level, such that if the synchronization is lower than the first reference level, then the method further includes the loss information in memory.

In another feature, the loss information includes information selected from the group consisting of position, time, and capacity of the lost portions of the stream data.

In yet another feature, the method further includes extracting the loss information using channel data and time data of an electronic program guide (EPG).

In still yet another feature, the method further includes storing the stream data in memory.

In an aspect, the mobile terminal includes a digital broadcasting receiving terminal.

In another aspect, the method further includes receiving lost stream data corresponding to the loss information from a video data server responsive to an information request. If desired, the lost stream data may also be stored.

In accordance with an alternative embodiment, a mobile terminal includes a receiver for receiving a video signal having stream data, and a controller configured to determine signal quality of the stream data and obtain loss information associated with a lost portion of the stream data responsive to the signal quality.

In accordance with another alternative embodiment, a method for controlling recording at a mobile terminal includes obtaining previously stored loss information, such that the loss information is associated with a lost portion of stream data of a video signal, and receiving lost stream data corresponding to the loss information from a video data server responsive to an information request.

In one aspect, the method further includes sending the information request to the video data server, identifying a channel that is associated with the lost portion of stream data of the video signal, identifying a download position of the identified channel, and downloading the lost stream data beginning from the download position of the identified channel.

According to yet another embodiment, a mobile terminal includes a controller configured to obtain previously stored loss information, such that the loss information is associated with a lost portion of stream data of a video signal, and a receiver for receiving lost stream data corresponding to the loss information from a video data server responsive to an information request.

According to still yet another embodiment, a method for providing video to a mobile terminal includes receiving an information request from a mobile terminal, the information request identifying loss information associated with a lost portion of stream data of a video signal. The method may further include searching a video data server for the lost portion of the stream data based upon the loss information, and communicating a video signal comprising the lost portion of the stream data to the mobile terminal.

These and other embodiments will also become readily apparent to those skilled in the art from the following detailed description of the embodiments having reference to the attached figures, the invention not being limited to any particular embodiment disclosed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments. In the drawings:

FIG. 1 is a schematic block diagram of a mobile terminal having a personal video recorder in accordance with an embodiment of the present invention;

FIG. 2 is a flowchart depicting a loss information extraction process; and

FIG. 3 is a flowchart depicting a lost data download process.

Reference will now be made in detail to the preferred embodiments of the present invention, examples of which are illustrated in the accompanying drawings.

### DETAILED DESCRIPTION OF THE PREFERRED EMBODIMENTS

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

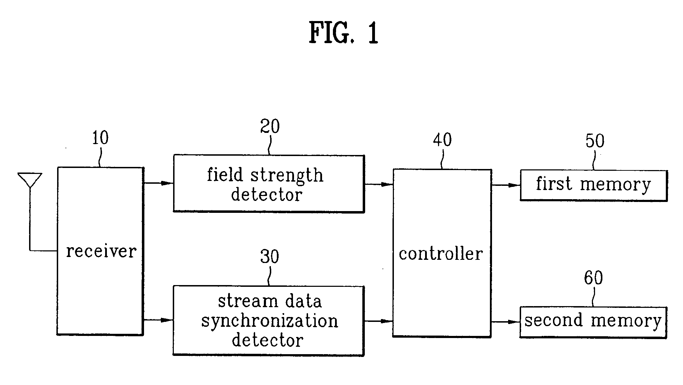

FIG. 1 is a schematic block diagram of a mobile terminal having a personal video recorder in accordance with an embodiment of the present invention. As shown in this figure, the mobile terminal includes receiver 10 for receiving and subsequently decoding a video signal. Field strength detector 20 and stream data synchronization detector 30 are shown receiving input from receiver 10. In a typical configuration, field strength detector 20 provides the field strength of the video signal received from the receiver, and detector 30 detects synchronization of the stream data of the video signal received by receiver 10.

The mobile terminal further includes controller 40, which may be configured to control video signal recording operations occurring at the mobile terminal. In accordance with an embodiment, operation of controller 40 (e.g., starting or stopping recording) is controlled responsive to signals received from field strength detector 20 and stream data synchronization detector 30.

FIG. 1 also shows the mobile terminal having first and second memories 50 and 60. First memory 50 is typically used for storing loss information of the stream data of the video signal. By way of example only, loss information includes information about a position, time, and capacity of lost stream data of a video signal. The loss information is typically stored in first memory 50 responsive to a control signal from controller 40. In accordance with an embodiment, controller 40 stores the loss information on the basis of channel information and time information available from an electronic program guide (EPG).

Second memory 60, on the other hand, may be used for storing stream data associated with the video signal. The stream data is stored in the second memory responsive to a control signal generated by controller 40. Although first and second memories are depicted as two separate components, this is not a requirement and greater or few memory components or modules may be used.

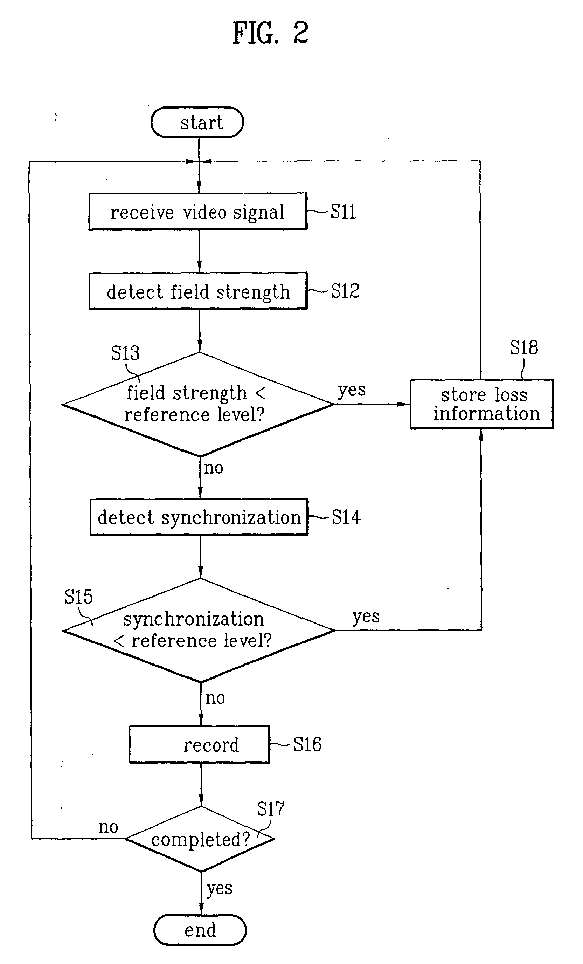

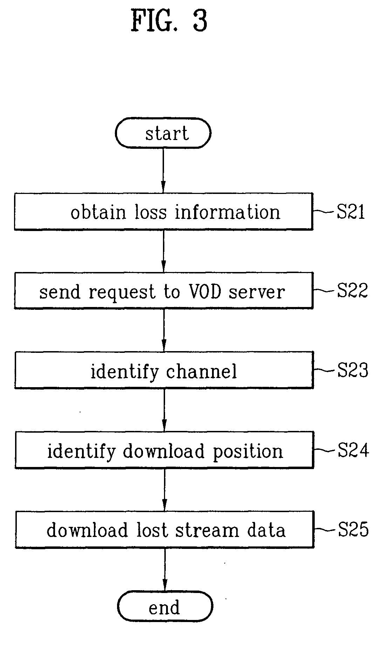

FIG. 2 is a flowchart depicting a loss information extraction process, and FIG. 3 is a flowchart depicting a lost data download process. By way of example only, these figures will be described with reference to the mobile terminal of FIG. 1, but embodiments of the present invention are not so limited.

Referring first to FIG. 2, block S11 includes receiving a video signal at receiver 10. Next, the field strength of stream data of the video signal is detected by field strength detector 20 (block S12). Typically, detector 20 provides the detected field strength to controller 40.

In decision block S13, the field strength is compared to a reference level. If the field strength is lower than the reference level, such a condition indicates that the reception environment is below acceptable standards. Accordingly, control then flows to block S18 so that loss information associated with the stream data may be stored in first memory 50 for later use. After the loss information is stored, control flows back to block S11.

Referring back to decision block S13, if the field strength meets or exceeds the reference level, such a condition indicates the presence of an acceptable reception environment. Stream data synchronization detector 30 may then detect the synchronization of the stream data of the video signal received by receiver 10 (block S14). The synchronization detector may then provide the detected synchronization to controller 40, which compares the detected synchronization with a reference level.

In block S15, a relatively poor reception environment, or other reception problem, is identified if the checked synchronization is less than the reference level. In this scenario, loss information associated with the stream data of the video signal is stored in memory 50 (block S18), and control flows back to block S11. On the other hand, if the detected synchronization is greater than or equal to the reference level, such a condition indicates that the reception environment meets or exceeds acceptable standards. In such a scenario, the stream data is recorded at memory 60 (block S16).

Block S17 determines if the operations of FIG. 2 have been completed or otherwise terminated. For instance, the process is determined to be completed upon receiving an inputted recording completion signal or if no stream data remains to be recorded.

As a result of the various operations of FIG. 2, recording operations may be stopped whenever the mobile terminal passes through a location having a relatively poor reception environment. However, such recording operations resume .once the mobile terminal leaves the poor reception environment and enters into a quality reception environment.

Reference is now made to FIG. 3, which depicts a lost data download process in accordance with embodiments of the present invention. The illustrated process is useful for downloading lost or otherwise missing portions of stream data of a video signal which was not recorded at the mobile terminal. A common reason for the stream data not being recorded is because the mobile terminal was located, for a period of time, within a poor reception environment.

Loss information is associated with lost or missing portions of stream data of a video signal, and may be obtained from, for example, first memory 50 (block S21). Another operation includes receiving lost stream data corresponding to the loss information from a video data server, responsive to an information request. For instance, after obtaining the loss information, the mobile terminal may send a request for stream data associated with the loss information to a VOD server, for example (block S22). Typically, the VOD server contains the desired video. In block S23, the loss information is searched to identify the channel that is associated with the lost stream data.

In block S24, a download position of the identified channel is identified. This download position denotes the beginning of the lost portion of the steam data, the recovery of which is desired. Next, the lost stream data is downloaded to the mobile terminal beginning from the identified download position of the identified channel (block S25). The mobile terminal receives the lost stream data, and then typically stores such data for later use.

The various recording operations presented herein are applicable to almost any mobile terminal capable of receiving digital broadcasts.

The foregoing embodiments and advantages are merely exemplary and are not to be construed as limiting the present invention. The present teaching can be readily applied to other types of apparatuses and processes. The description of the present invention is intended to be illustrative, and not to limit the scope of the claims. Many alternatives, modifications, and variations will be apparent to those skilled in the art.

## Claims

1. A method for controlling recording at a mobile terminal, said method comprising:
receiving a video signal comprising stream data;
determining signal quality of said stream data; and
obtaining loss information associated with a lost portion of said stream data responsive to said signal quality.

2. The method according to claim 1, wherein said determining of said signal quality comprises:
comparing field strength of said stream data with a first reference level, wherein if said field strength is lower than said first reference level, then said method further comprises:
storing said loss information in memory.

3. The method according to claim 1, wherein said determining of said signal quality comprises:
comparing synchronization of said stream data with a first reference level, wherein if said synchronization is lower than said first reference level, then said method further comprises:
storing said loss information in memory.

4. The method according to claim 1, wherein said determining of said signal quality comprises:
comparing field strength of said stream data with a first reference level;
comparing synchronization of said stream data with a second reference level; and
storing said loss information in memory if said field strength is lower than said first reference level, or if said synchronization is lower than said second reference level.

5. The method according to claim 1, wherein said loss information comprises information selected from the group consisting of position, time, and capacity of said lost portions of said stream data.

6. The method according to claim 5, said method further comprising:
extracting said loss information using channel data and time data of an electronic program guide (EPG).

7. The method according to claim 1, further comprising:
storing said stream data in memory.

8. The method according to claim 1, wherein said mobile terminal is a digital broadcast receiving terminal.

9. The method according to claim 1, further comprising:
receiving lost stream data corresponding to said loss information from a video data server responsive to an information request.

10. The method according to claim 9, further comprising:
storing said lost stream data.

11. A mobile terminal, comprising:
a receiver for receiving a video signal comprising stream data;
a controller configured to:
determine signal quality of said stream data; and
obtain loss information associated with a lost portion of said stream data responsive to said signal quality.

12. The mobile terminal according to claim 11, further comprising:
a field strength detector configured to detect field strength of said stream data, wherein said controller is further configured to determine said signal quality by:
comparing field strength of said stream data with a first reference level, wherein if said field strength is lower than said first reference level, then said controller is further configured to:
store said loss information in memory.

13. The mobile terminal according to claim 11, further comprising:
a synchronization detector configured to detect synchronization of said stream data, wherein said controller is further configured to determine said signal quality by:
comparing synchronization of said stream data with a first reference level, wherein if said synchronization is lower than said first reference level, then said controller is further configured to:
store said loss information in memory.

14. The mobile terminal according to claim 11, wherein said controller is further configured to determine said signal quality by: comparing field strength of said stream data with a first reference level;
comparing synchronization of said stream data with a second reference level; and
storing said loss information in memory if said field strength is lower than said first reference level, or if said synchronization is lower than said second reference level.

15. The mobile terminal according to claim 11, wherein said loss information comprises information selected from the group consisting of position, time, and capacity of said lost portions of said stream data.

16. The mobile terminal according to claim 11, further comprising:
memory for storing said stream data.

17. The mobile terminal according to claim 11, wherein said mobile terminal is a digital broadcast receiving terminal.

18. The mobile terminal according to claim 11, further comprising:
a receiver for receiving lost stream data corresponding to said loss information from a video data server responsive to an information request.

19. The mobile terminal according to claim 18, further comprising:
a memory for storing said lost stream data.

20. A method for controlling recording at a mobile terminal, said method comprising:
obtaining previously stored loss information, wherein said loss information is associated with a lost portion of stream data of a video signal; and
receiving lost stream data corresponding to said loss information from a video data server responsive to an information request.

21. The method according to claim 20, further comprising:
communicating said information request to said video data server.

22. The method according to claim 21, wherein said information request is generated by said mobile terminal.

23. The method according to claim 20, further comprising:
storing said lost stream data.

24. The method according to claim 20, further comprising:
sending said information request to said video data server;
identifying a channel that is associated with said lost portion of stream data of said video signal;
identifying a download position of said identified channel; and
downloading said lost stream data beginning from said download position of said identified channel.

25. The method according to claim 20, wherein said video data server is a video on demand (VOD) server.

26. The method according to claim 20, wherein said mobile terminal comprises a digital broadcast receiving terminal.

27. A mobile terminal, comprising:
a controller configured to obtain previously stored loss information, wherein said loss information is associated with a lost portion of stream data of a video signal; and
a receiver for receiving lost stream data corresponding to said loss information from a video data server responsive to an information request.

28. The mobile terminal according to claim 27, further comprising:
memory for storing said lost stream data.

29. The mobile terminal according to claim 27, further comprising:
memory for storing said loss information.

30. The mobile terminal according to claim 27, wherein said mobile terminal is a digital broadcast receiving terminal.

31. A method for providing video to a mobile terminal, said method comprising:
receiving an information request from a mobile terminal, said information request identifying loss information associated with a lost portion of stream data of a video signal;
searching a video data server for said lost portion of said stream data based upon said loss information; and
communicating a video signal comprising said lost portion of said stream data to said mobile terminal.

32. The method according to claim 31, wherein said searching further comprises:
searching said video data server to identify a channel associated with said loss information; and
searching said video data server to identify a download position in said identified channel which corresponds to a beginning location of said lost portion of stream data, wherein said method further comprises:
generating said video signal comprising said lost portion of said stream data based upon said download position.

33. The method according to 31, wherein said video data server is a video on demand (VOD) server.
